# EUROPEAN PATENT APPLICATION

(11) **EP 3 878 680 A2**
(43) Date of publication of application: **15.09.2021**
(21) Application number: 21275024.4
(22) Date of filing: 08.03.2021
(51) Int. Cl.: B60L 5/18, B60L 5/38, B60L 9/16, B60L 50/53

(54) **DRIVE SYSTEM FOR A RAILWAY VEHICLE**

(30) Priority: 13.03.2020 GB 202003677
(71) Applicant: HITACHI RAIL LIMITED, London Greater London EC4M 7AW (GB)
(72) Inventor: DAUTEL, Christopher, London, Greater London EC1N 2PB (GB); AGATSUMA, Koji, London, Greater London EC1N 2PB (GB)
(74) Representative: Mewburn Ellis LLP

(57) **Abstract**

A drive system for a railway vehicle is provided. The drive system includes a first power supply sub-system for supplying power from an overhead line or live rail. The drive system further includes an inverter joined to the first power supply sub-system by a DC link, the inverter converting the DC power to three phase AC power. The drive system further includes an electric motor for providing traction torque to the vehicle and connected to the inverter by a three phase AC link such that the three phase AC power from the inverter drives the electric motor. The drive system further includes a rechargeable traction battery connected to the DC link for providing DC power to or removing DC power from the drive system at the DC link. The drive system further includes a second power supply sub-system for providing three phase AC power to the drive system at the three phase AC link, the second power supply sub-system including a contactor moveable between a deployed position at which the contactor can make an electrical connection to a power outlet of an external three phase AC power supply network, and a retracted position at which such an electrical connection is prevented. The drive system further includes a first switch on the three phase AC link, the first switch being configured such that a closed position of the first switch connects the electric motor to the three phase AC link to allow the three phase AC power from the inverter to drive the electric motor, and an open position of the first switch disconnects the electric motor from the three phase AC link to prevent the three phase AC power from the inverter and the three phase power from the second power supply sub-system from driving the electric motor. The drive system further includes a controller which controls operation of the drive system, the controller being configured to provide: (i) a first circuit configuration of the drive system in which the contactor is in its retracted position, the first switch is in its closed position, and the electric motor is driveable by power supplied by the first power supply sub-system and/or the traction battery, and (ii) a second circuit configuration of the drive system in which the contactor is in its deployed position for connection to the power outlet, the first switch is in its open position, and the traction battery is chargeable by three phase AC power supplied by the three phase AC power supply network and converted to DC power by the inverter.

## Description

### Field of the disclosure

The present disclosure relates to drive system for a railway vehicle.

### Background

Railway vehicles carrying battery-based rechargeable energy storage systems are known, connection to the battery being placed between the power source (such as a diesel engine prime mover) and the traction transmission system connected to the wheels. Surplus energy from the power source, or energy derived from regenerative braking, charges the battery. During acceleration, stored energy from the battery is directed to the transmission system, boosting that available from the prime mover.

Less common are railway vehicles carrying rechargeable traction batteries, where the batteries are the prime mover for the vehicle.

However, one example, is the two-car BEC819 series BEMU battery/electric train operated since 2016 by JR Kyushu on part of the Chikuho Main Line. This train has rechargeable traction batteries, but can also be powered via overhead AC power line. Another example is the Cityjet eco train operated by Austrian Federal Railways. This train is also equipped to operate with rechargeable traction batteries and overhead lines.

In both these examples, the trains are used for "gap-filling" operation, in which the trains are used on both electrified and non-electrified track sections, allowing their batteries to be recharged by overhead pickup when the trains are travelling on the electrified sections.

### Summary

It would be desirable, however, to provide a railway vehicle drive system which can be used adaptably and flexibly as required on fully electrified networks, non-electrified networks (i.e. in which opportunity for battery recharging is only present at terminal stations), and partially electrified networks (i.e. gap-filling operation).

Accordingly, a first aspect of the present disclosure provides a drive system for a railway vehicle, the drive system including:
a first power supply sub-system for supplying power from an overhead line or live rail;
an inverter joined to the first power supply sub-system by a DC link, the inverter converting the DC power to three phase AC power;
an electric motor for providing traction torque to the vehicle and connected to the inverter by a three phase AC link such that the three phase AC power from the inverter drives the electric motor;
a rechargeable traction battery connected to the DC link for providing DC power to or removing DC power from the drive system at the DC link;
a second power supply sub-system for providing three phase AC power to the drive system at the three phase AC link, the second power supply sub-system including a first contactor moveable between a deployed position at which the first contactor can make an electrical connection to a power outlet of an external three phase AC power supply network, and a retracted position at which such an electrical connection is prevented;
wherein the drive system further includes a first switch on the three phase AC link, the first switch being configured such that a closed position of the first switch connects the electric motor to the three phase AC link to allow the three phase AC power from the inverter to drive the electric motor, and an open position of the first switch disconnects the electric motor from the three phase AC link to prevent the three phase AC power from the inverter and the three phase power from the second power supply sub-system from driving the electric motor; and
wherein the drive system further includes a controller which controls operation of the drive system, the controller being configured to provide: (i) a first circuit configuration of the drive system in which the first contactor is in its retracted position, the first switch is in its closed position, and the electric motor is driveable by power supplied by the first power supply sub-system and/or the traction battery, and (ii) a second circuit configuration of the drive system in which the first contactor is in its deployed position for connection to the power outlet, the first switch is in its open position, and the traction battery is chargeable by three phase AC power supplied by the three phase AC power supply network and converted to DC power by the inverter.

Thus the first power supply sub-system allows the drive system to be used on fully electrified networks, the combination of the rechargeable traction battery and the second power supply sub-system allows the drive system to be used on non-electrified networks (with battery recharging at terminal stations having power outlets of external three phase AC power supplies), and the combination of the rechargeable traction battery and the first power supply sub-system allows the drive system to be used for gap-filling operation on partially electrified networks.

Conventional infrastructure for recharging batteries via overhead lines is costly to install, such infrastructure typically being required to provide, via a dedicated local substation, single phase AC power at tens of thousands of volts to the overhead lines, or DC power at hundreds of volts to third rails. However, advantageously, the drive system of the present disclosure can recharge its traction batteries using an external three phase AC power supply network of the kind used to provide relatively low voltage electrical power to commercial and residential customers through service drops from secondary distribution lines. This is much simpler and cheaper infrastructure to provide at terminal stations, requiring no dedicated local substations and no overhead lines.

A second aspect of the present disclosure provides a railway vehicle having the drive system according to the first aspect.

A third aspect of the present disclosure provides a method of charging the traction battery of the drive system of the railway vehicle of the second aspect, the method including:
using the controller to implement the first circuit configuration of the drive system;
operating the vehicle to locate the first contactor such that it is deployable for connection to a power outlet of an external three phase AC power supply network;
using the controller to implement the second circuit configuration of the drive system; and
charging the traction battery by three phase AC power supplied by the three phase AC power supply network and converted to DC power by the inverter.

Optional features of the present disclosure will now be set out. These are applicable singly or in any combination with any of the above aspects of the present disclosure.

The three phase AC power supply network typically provides power at a voltage of no more than 300 V.

The first power supply sub-system may include a second contactor (such as a pantograph) for contacting the overhead line or live rail. The first power supply sub-system may include a circuit breaker (such as a vacuum circuit breaker) between the second contactor and the DC link.

For example, the first power supply sub-system may obtain AC power from the overhead line or live rail, and may include an AC to DC converter which converts the obtained AC power to DC power in the DC link. In this case, the first power supply sub-system may include a transformer connected between the second contactor and the AC to DC converter. The circuit breaker may then be positioned between the second contactor and the AC to DC converter, and preferably between the second contactor and the transformer. In this example, the first power supply sub-system may be a bi-mode system further including a generator unit (e.g. a diesel generator unit). In such a bi-mode system, the AC to DC converter can selectably convert AC power obtained from either the overhead line or live rail or obtained from the generator unit to DC power in the DC link.

As another example, the first power supply sub-system may obtain DC power from the overhead line or live rail. In this case, the first power supply sub-system may include a DC to DC converter (e.g. based on a chopper circuit) between the second contactor and the DC link. The circuit breaker may then be positioned between the second contactor and the DC to DC converter.

Although, the traction battery may be charged by power supplied by the first power supply sub-system when the vehicle is running on an electrified section of track, the controller may conveniently be configured to provide a third circuit configuration of the drive system in which the first contactor is in its retracted position and the first switch is in its open position, and the traction battery is chargeable by power supplied by the first power supply sub-system. The third circuit configuration may then be used to charge the traction battery by the power supplied by the first power supply sub-system when the vehicle is stationary, e.g. being held at a terminal station, and an overhead line or third rail is present. Having the first switch in its open position eliminates any possibility that the electric motor might inadvertently provide traction torque to the vehicle using power derived from the first power supply sub-system.

In the first circuit configuration, the traction battery may be charged selectably by power supplied from the first power supply sub-system and/or by three phase AC power supplied by the electric motor operating as a generator and converted to DC power by the inverter.

The drive system may further include a second switch positioned between the first contactor and the three phase AC link, the second switch being configured such that a closed position of the second switch connects the first contactor to the three phase AC link to allow the three phase AC power from the external three phase AC power supply network to pass from the first contactor to the inverter, and an open position of the second switch which disconnects the first contactor from the three phase AC link to prevent the three phase AC power from the external three phase AC power supply network from reaching the three phase AC link.

In the first circuit configuration the second switch is in its open position, and in the second circuit configuration the second switch is in its closed position. The second switch thus helps to eliminate any possibility that power supplied from the external three phase AC power supply network via the first contactor might inadvertently drive the motor. In particular the first and second switches may be interlinked such that the second switch can be in its closed position only when the first switch is in its open position, and the first switch can be in its closed position only when the second switch is in its open position. When the controller provides the third circuit configuration, this configuration may include having the second switch in its open position.

As an alternative to the second switch, however, the first switch may be a three position switch having the closed position, the open position and an isolation position, the first switch being further configured such that the closed position also disconnects the first contactor from the three phase AC link to prevent the three phase AC power from the external three phase AC power supply network from reaching the three phase AC link, the open position also connects the first contactor to the three phase AC link to allow the three phase AC power from the external three phase AC power supply network to pass from the first contactor to the inverter, and the isolation position disconnects the first contactor from the three phase AC link and disconnects the electric motor from the three phase AC link. When the controller provides the third circuit configuration, this configuration may include having the first switch is in its isolation position. Thus the three position switch can provide the same functionality as the combination of first and second switches discussed above.

The driving system may further include an extension mechanism on which the first contactor is mounted, the mechanism being extendable from the vehicle to move the first contactor to its deployed position, and withdrawable to the vehicle to move the first contactor to its retracted position. For example, the extension mechanism may conveniently be locatable beneath a floor of the railway vehicle for electrical connection by the first contactor to the power outlet of the external three phase AC power supply network located on the ground beneath the vehicle between the rails of a railway track. The extension mechanism may be actuatable in various ways, e.g. mechanically, pneumatically or hydraulically. It may have a separately actuatable locking system to retain the first contactor in its retracted position.

The first contactor may have three current collectors for making respective electrical contact to a set of three, parallel, adjacent rails of the power outlet, the parallel rails extending in the direction of a track on which the vehicle is located.

The controller may be further configured to detect that the power outlet of the external three phase AC power supply network is in a location suitable for electrical connection thereto by the first contactor, and to allow adoption of the second circuit configuration by the drive system only when the power outlet is thus-detected. For example, the controller may be further configured to detect that the power outlet is in a suitable location by reference to one or more detection units associated with the power outlet whose positions the controller can detect, e.g. using one or more corresponding proximity sensors. In particular, when the power outlet has a set of parallel, adjacent rails extending in the direction of a track, a detection unit may be located at each end of the each end of the set of rails in the direction of the track.

Indeed, a fourth aspect of the present disclosure provides a power outlet of a three phase AC power supply network, the outlet being installable on the ground between the rails of a railway track for charging a rechargeable traction battery of a drive system of a railway vehicle, the power outlet having a set of three, parallel, adjacent rails extending in the direction of the track for electrical connection to respective current collectors of a first contactor of the drive system deployable from beneath the floor of the railway vehicle. The power outlet may further include a respective detection unit at each end of the set of rails in the direction of the track, the detection units being detectable by the railway vehicle to allow the vehicle to determine that a first contactor of its drive system is deployable from the vehicle to make an electrical connection to the power outlet.

A fifth aspect of the present disclosure provides the power outlet of the fourth aspect installed on the ground between the rails of a railway track.

A sixth aspect of the present disclosure provides a combination of the railway vehicle of the second aspect and the installed power outlet of the fifth aspect, the railway vehicle being located on the rails of the railway track.

### Brief description of the drawings

Embodiments will now be described by way of example only, with reference to the Figures, in which:
Figure 1 shows schematically a drive system for a railway vehicle;
Figure 2 is a table showing pantograph, contactor and switch actuation patterns for selected operating modes of the vehicle;
Figure 3 shows schematically a contactor of the drive system and a power outlet of an external three phase AC power supply network;
Figure 4 shows schematically an extension mechanism for the contactor;
Figure 5 shows schematically a variant extension mechanism for the contactor;
Figure 6 shows, following the arrow at left hand side, steps in a charging operation procedure, and, following the arrows at right hand side, steps in a completion operation procedure;
Figure 7 shows schematically a variant of the drive system;
Figure 8 shows schematically another variant of the drive system; and
Figure 9 shows schematically yet another variant of the drive system.

### Detailed description

Aspects and embodiments of the present disclosure will now be discussed with reference to the accompanying figures. Further aspects and embodiments will be apparent to those skilled in the art.

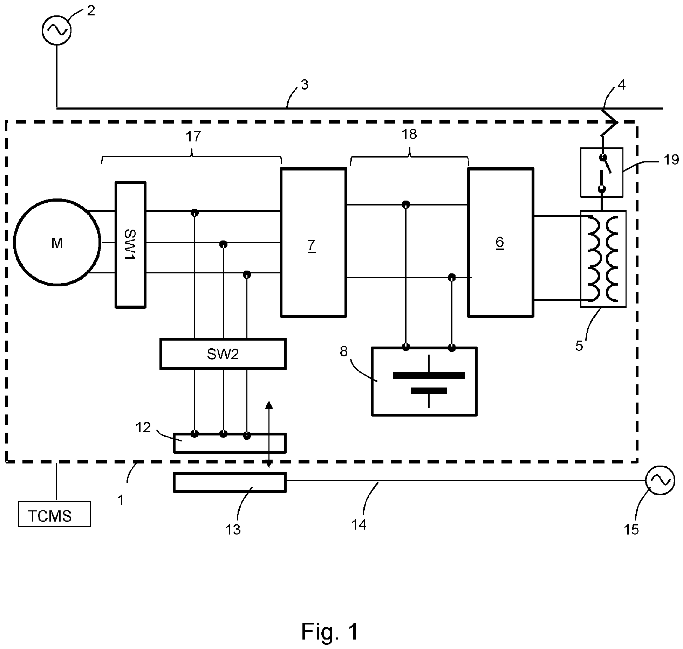

Figure 1 shows a simplified schematic of a drive system 1 for a railway vehicle. The drive system includes a pantograph 4 which is moveable between raised and lowered positions. In the raised position the pantograph is able to make contact with overhead lines 3 when the vehicle is on electrified sections of track for the supply of single phase AC power to the drive system. Typically this AC power is at tens of thousands of volts, as dictated by national or regional railway system requirements. It is provided to the overhead lines by substations 2 which usually form part of dedicated rail infrastructure.

The AC power from the pantograph 4 is provided to a transformer 5 of the drive system 1. Typically a vacuum circuit breaker 19 is interposed between the pantograph and the transformer to control the electrical connection between these two components. The stepped-down AC power from the transformer is provided to an AC to DC converter 6 for conversion to DC power. The converter may be based on switching circuits comprising IGBTs and diodes connected in antiparallel, as shown for example in EP A 2689983 and EP A 2671748. Control of the converter may be by pulse width modulation (PWM), whereby the output of the converter can be controlled by switching frequency and duration.

The converter 6 is joined to an inverter 7 by electrical power lines of a DC link 18, the inverter converting the DC power from the converter to three phase AC power. An electric motor M then receives the three phase AC power produced by the inverter via electrical power lines of a three phase AC link 17. The inverter may be of variable frequency drive type. Thus, like the converter, it may be based on switching circuits comprising IGBTs and diodes connected in antiparallel, and controlled by PWM. This allows it to exert control over the rotation speed of the motor, which may be of synchronous or asynchronous type. The motor provides traction torque to mechanical equipment items of the vehicle, such as a gearbox and wheel axle.

The inverter 7 and the converter 6 can also operate in reverse. This allows the motor M to function as a generator in a regenerative braking mode of the drive system 1 such that electrical power produced by the motor in this mode can be sent via the inverter, the converter and transformer 5 to the overhead lines 3 as single phase, high voltage AC power.

A rechargeable traction battery 8 connected to the DC link 18 provides DC power to or removes DC power from the drive system 1 at the DC link. When the vehicle runs on non-electrified sections of track, the battery can thus provide power for the electric motor M via the DC link 18, inverter 7 and AC link 17. In the regenerative braking mode when running on non-electrified sections of track, the system can direct the electrical power produced by the motor to the battery. Moreover, in the regenerative braking mode when running on electrified sections of track, the system has the option of directing the power produced by the motor to the battery rather than to the overhead lines 3.

The flow of current into and out of the battery 8 can be controlled by modulating the voltage within the DC-link 18. Conveniently, this modulation is determined by adjusting the operation of the converter 6, as discussed above. When the output voltage of the battery is higher than voltage of DC-link, the battery provides power to DC-link, and when the output voltage of the battery is lower than voltage of DC-link the battery is recharged by power drawn from the DC-link.

The battery 8 may be formed from a plurality of battery cells, which may be of lithium ion type, lead type or other. Typically the battery is located under the floor structure of the vehicle or on its roof. The battery may be connected with the DC-link 18 via a switch (not shown) for controlling connection between DC-link 18 and the battery. The power capacity and output performance of the battery are selected depending on factors such as travel speed, mass of vehicle, maximum travel distance under battery power, and amount of electricity-consuming equipment, such as heating, ventilation and air-conditioning equipment etc.

The overall operation of the drive system 1 is under the control of a controller, which for convenience in the following we assume is part of a wider train control and management system (TCMS). Thus position of the pantograph 4, position of the vacuum circuit breaker 19, and PWM switching control of the converter 6 and inverter 7 are subject to control signals provided by the TCMS. The signal transmission architecture can be an IP based network, a controller area network (CAN) or other. In service, the TCMS receives a signal indicating notch information set by a master controller or automatic train operation system, and in turn generates signals for the inverter 7 based on its interpretation of notch information as a motor torque requirement. The TCMS also generally has wired or wireless connections with other electrical equipment items, including sensors such as a driving speed detector, location sensor (such as a GPS or GNSS) etc.

The drive system may have other components, such as smoothing capacitors, filters and auxiliary power supply (APS) circuitry, which are not shown in Figure 1.

The pantograph 4, vacuum circuit breaker 19, transformer 5 and AC to DC converter 6 form a first power supply sub-system of the drive system 1. In addition to being able to recharge the battery 8 via this sub-system, the drive system has a second power supply sub-system for recharging the battery. This second sub-system introduces three phase AC power to the drive system at the three phase AC link 17. In particular, it includes a contactor 12 moveable between a deployed position at which the contactor can make an electrical connection to a power outlet 13 of an external three phase AC power supply network 15, and a retracted position at which such an electrical connection is prevented. Advantageously, this network can be of the kind used to provide relatively low voltage (e.g. less than 300 V) electrical power to commercial and residential customers through service drops from secondary distribution lines. Compared to the dedicated substations used to provide high voltage power to overhead lines, such power outlets are relatively simple and cheap infrastructure to install. Accordingly, the technical and economic barriers to providing terminal stations on non-electrified networks with power outlets for recharging the battery of the vehicle are low.

The three phase AC power introduced into the drive system 1 at the AC link 17 is converted to DC power by the inverter 7 in order to charge the battery 8. However, during this process as the vehicle is stationary it is critically important that the three phase AC power does not drive the motor M. Thus the drive system 1 has a first switch SW1 having a closed position which connects the motor to the three phase AC link to allow three phase AC power from the inverter to drive the motor, and an open position which disconnects the motor from the three phase AC link to prevent the three phase AC power from the inverter or from the contactor 12 from driving the motor.

Accordingly, the TCMS controls the first switch SW1 and the contactor 12 to provide: a first circuit configuration in which the contactor 12 is retracted and the first switch SW1 is closed; and a second circuit configuration in which the contactor 12 is deployed the first switch SW1 is open. The first circuit configuration is used for vehicle operations such as: when the vehicle is driving within an electrified section; when the battery 8 is being charged by the overhead lines 3 (suitable control of the inverter 7 can, if necessary, prevent electrical power from reaching the motor M); and during regenerative braking. The second circuit configuration is used when the battery is being charged via the contactor 12.

Typically, the drive system 1 also has a second switch SW2 positioned between the contactor 12 and the three phase AC link 17. The second switch SW2 has a closed position which connects the contactor to the three phase AC link, and an open position which disconnects the contactor from the three phase AC link. In the first circuit configuration the second switch is open, and in the second circuit configuration the second switch is in its closed position. The second switch thus helps to eliminate any possibility that power supplied from the external three phase AC power supply network 15 via the contactor might inadvertently drive the motor M. Preferably, the first SW1 and second SW2 switches are interlinked such that the second switch can be closed only when the first switch is open, and the first switch can be closed only when the second switch is open.

The TCMS can also control the first switch SW1 and the contactor 12 to provide a third circuit configuration in which the contactor 12 is retracted and the first switch is open. Typically also the second switch SW2 is open in this configuration. This configuration may then be used to charge the battery 8 by AC power supplied by the overhead line 3 when the vehicle is stationary, e.g. when it is stopped at a terminal station which is part of an electrified network. The third circuit configuration can eliminate any possibility that the motor M might inadvertently provide traction torque during stationary charging.

The first switch SW1 and the second switch SW2 are each configured to change the power transmission capability of the three phase AC electrical power lines which they interrupt. In particular, they each have sufficient insulating capability in their open positions to resist the voltage generated in the lines when the other switch is closed.

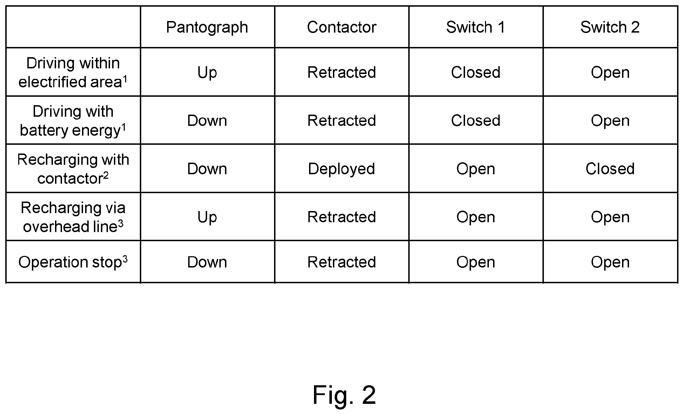

Figure 2 is a table showing pantograph, contactor and switch actuation patterns for selected operating modes of the vehicle. The superscripted numbers 1-3 in the first column indicate the actuation patterns to which of the first to third circuit configurations belong.

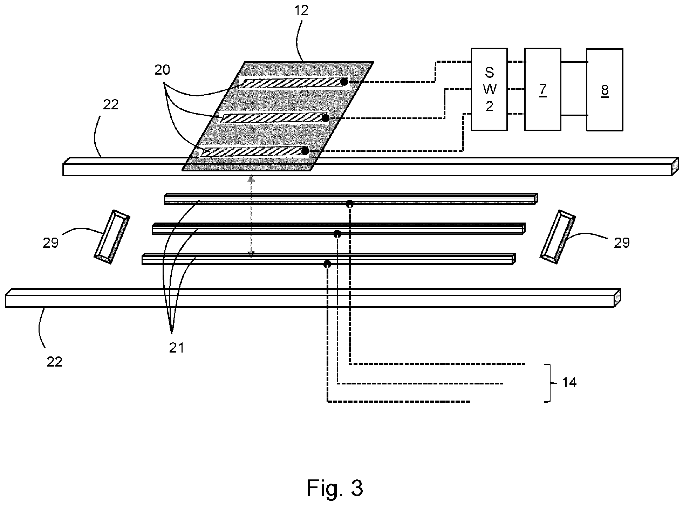

Figure 3 shows schematically the contactor 12 and the power outlet 13 of the external three phase AC power supply network 15. The contactor is movable upward (retracted) and downward (deployed) from beneath the floor of the vehicle, as indicated by the dashed, double-headed arrowed line in Figure 3. The contactor has three current collectors 20 in the form of adjacent parallel strips, with contact faces of the collectors being directed towards the ground. The power outlet is formed by three parallel, adjacent rails 21, which are generally longer than the strips, but which correspond to the spacing of the strips. The three rails are connected in turn to respective power lines 14 for the three phases of the external three phase AC power supply network 15. The rails of the outlet are generally located on the ground midway between the rails 22 of the railway track on which the vehicle is located when charging via the contactor. Downwards movement of the contactor brings the contact faces of the current collectors into electrical contact with the rails 21 of the power outlet. It is generally preferred that the width of each contact face is greater than that of each rail 21, although the contact face width should not be so great that there is a risk of short circuiting to an adjacent rail 21.

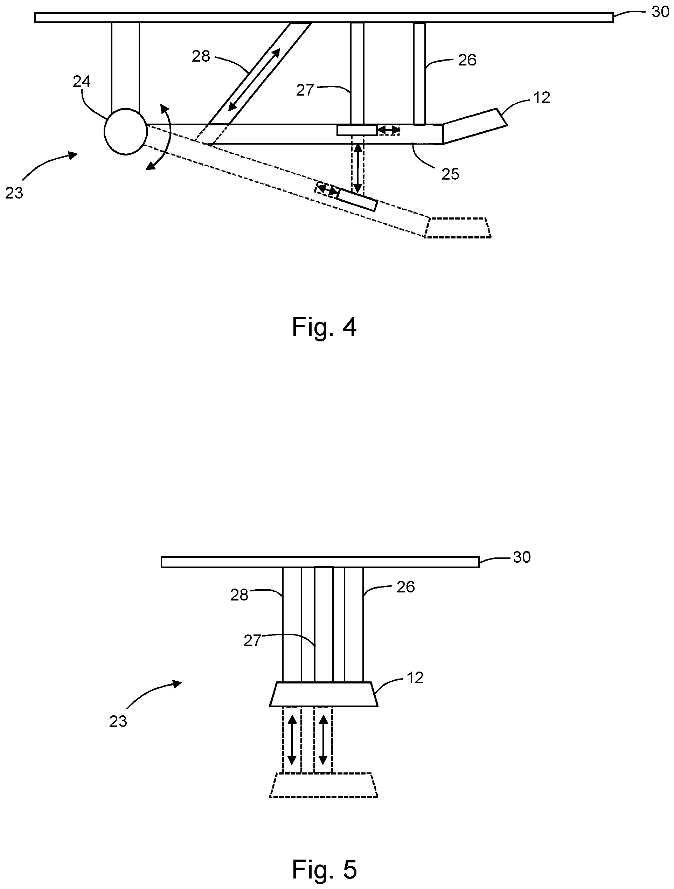

Figure 4 shows schematically one possible form of an extension mechanism 23 on which the contactor 12 is mounted beneath the floor 30 of the vehicle to move it between its retracted (solid lines) and deployed (dashed lines) positions. In Figure 4 double-headed arrowed lines indicate movements of components of the mechanism. The mechanism has an arm 24, with one end of the arm rotatable about a hinge 25, and the other end of the arm carrying the contactor 12. A locking member 26 holds the arm in position in the retracted position, but is controllable on receipt of a release signal from the TCMS to release the arm for movement to the deployed position. Rotational movement of the arm about the hinge is produced, under the control of the TCMS, by operation of an extendable actuator 27 which projects downwards from the vehicle floor. The actuator is slidably connected at its far end by an articulating joint to the arm to accommodate the rotational movement of the arm. The actuator can be, for example, mechanically, pneumatically or hydraulically operated, and acts against a counterforce produced by a spring 28 which biases the arm to its retracted position.

The arm 24 provides a support for the electrical power lines which run from the second switch SW2 to the contactor 12. These lines can extend as respective wires along the length of the arm from the hinge 24 to the contactor. Advantageously, the rotational movement of the hinge involves little or no change in the distance which these wires must travel, and accordingly this form of extension mechanism 23 does not need to accommodate much bending or shifting of the wires during movement of the arm.

A variant form of the extension mechanism 23 is shown schematically in Figure 5. In the variant, the contactor 12 is simply mounted at the end of the actuator 27, and is thus movable with the end of the actuator in a vertical direction from the floor 30 of the vehicle between its retracted (solid lines) and deployed (dashed lines) positions. The wires of the electrical power lines run down the actuator to the contactor, and thus the variant does require the extension mechanism 23 to accommodate bending or shifting of the wires during movement.

As shown in Figure 3, the rails 21 of the power outlet 13 can be associated with one or more detection units 29, for example one such unit can be located at each end of the power outlet in the direction of the track to indicate entry into a charging zone. The vehicle has one or more corresponding proximity sensors which detect the presence of the detection units (e.g. using magnetic detection), and signal this presence to the TCMS, which can thus determine when the vehicle is correctly positioned in the charging zone above the power outlet, and therefore when it is safe to initiate a charging operation procedure using the contactor 12. For example, the vehicle can have a proximity sensor in each of the head car and end car. If the distance between the detection units is the same, or greater than the distance between the sensors, a condition in which both the head car sensor and the end car sensor are between the detection units can be determined, and used to confirm correct positioning in the charging zone

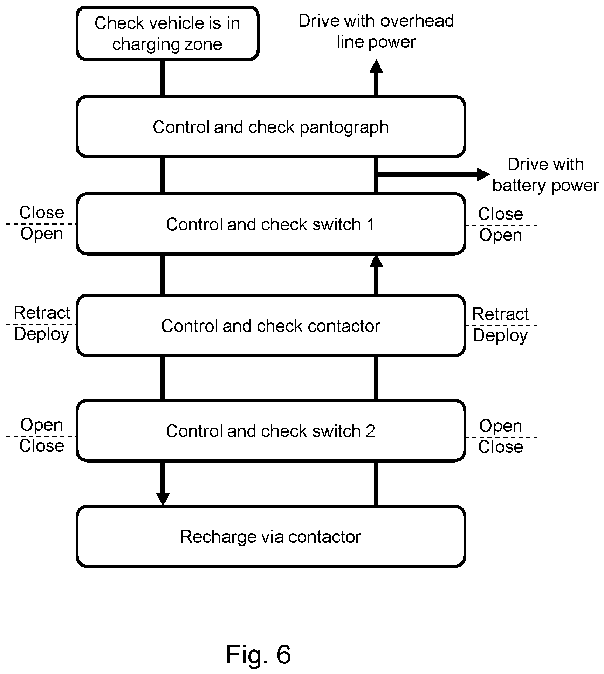

Figure 6 shows, following the arrow at left hand side, steps in a charging operation procedure. Step 1 is for the TCMS to check that the vehicle is in the charging zone, as indicated by signals received from the proximity sensors. Another option, however, is for the TCMS to determine position in the charging zone by GPS, or other form of positioning system. In addition, the TCMS monitors the speed of the vehicle, and for the charging operation ensures that the vehicle speed is always zero.

Having confirmed entry in the charging zone and stoppage of the vehicle the TCMS proceeds to step 2. Here the TCMS opens the vacuum circuit breaker 19 and lowers the pantograph 4, or ensures that the breaker is open and the pantograph is lowered if the vehicle has entered the charging zone using the power from the battery 8. This ensures that the charging circuitry using the contactor 12 is isolated from the overhead line 3.

In step 3 the first switch SW1 is commanded to be opened by the TCMS to separate the motor M from the charging circuitry by suspending power transmission from the inverter 7 to the motor.

In step 4, the TCMS sends a release signal to the locking member 26 of the extension mechanism 23, and then controls the actuator 27 to move the contactor 12 to its deployed position where the contact faces of its current collectors 20 make electrical contact with the rails 21 of the power outlet 13. The TCMS can monitor the contact condition using a suitably positioned contact sensor carried by the arm 25 or the contactor itself.

Next, in step 5, the TCMS conducts commands the closing of the second switch SW2, allowing three phase power to flow via the contactor 12 to the inverter 7. The TCMS monitors the frequency, phase angle and amplitude of each phase power through continuous voltage sensing. These monitoring data are sent to a switching controller of the inverter 7, which is operated as an AC to DC converter according to the data. DC power outputted by the inverter is then provided to the battery 8. When the state of charge of the battery recovers to a desired level, the charging operation procedure is complete.

Figure 6 also shows, following the arrows at right hand side, steps in a completion operation procedure. These essentially reverse the charging operation procedure with suitable checks at each stage so that, in order: the inverter 7 stops its operation, the second switch SW2 is opened, the contactor 12 is moved to its retracted position and locked, and the first switch SW1 is closed enabling power transmission from the inverter to the motor M. Thereafter the vehicle can be driven away from the charging zone using battery power or overhead line power, as the case may be.

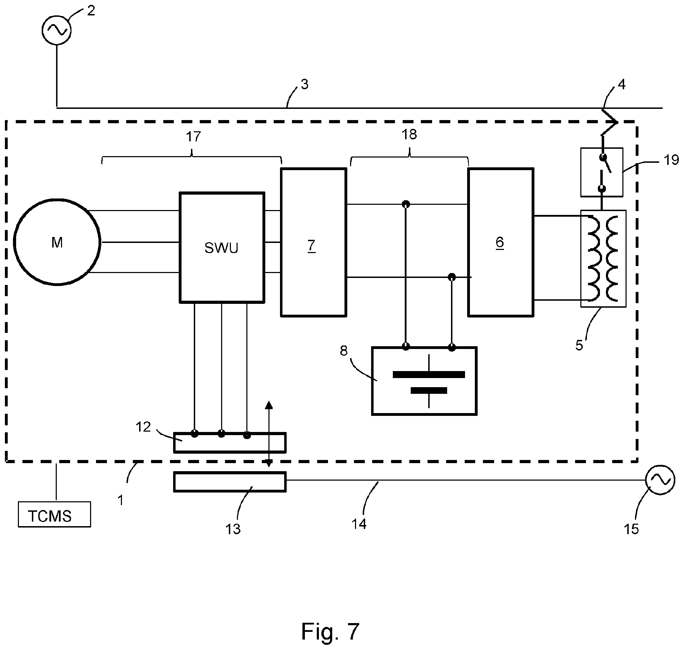

Figure 7 shows schematically a variant of the drive system 1. The variant is identical to the system shown in Figure 1 except that instead of separate (albeit interlinked) first SW1 and second SW2 switches, the system has a three position switching unit SWU. In a first position of the switching unit, the motor M is connected to the three phase AC link to allow three phase AC power from the inverter 7 to drive the motor while the contactor 12 is disconnected from the three phase AC link. In a second position of the switching unit, the motor is disconnected from the three phase AC link while the contactor is connected to the three phase AC link to allow charging of the battery 8. In a third position of the switching unit, both the motor and the contactor are disconnected from the three phase AC link. Thus the switching unit provides the same functionality as the interlinked first and second switches, noting that it has no position which simultaneously connects the motor and the contactor to the three phase AC link.

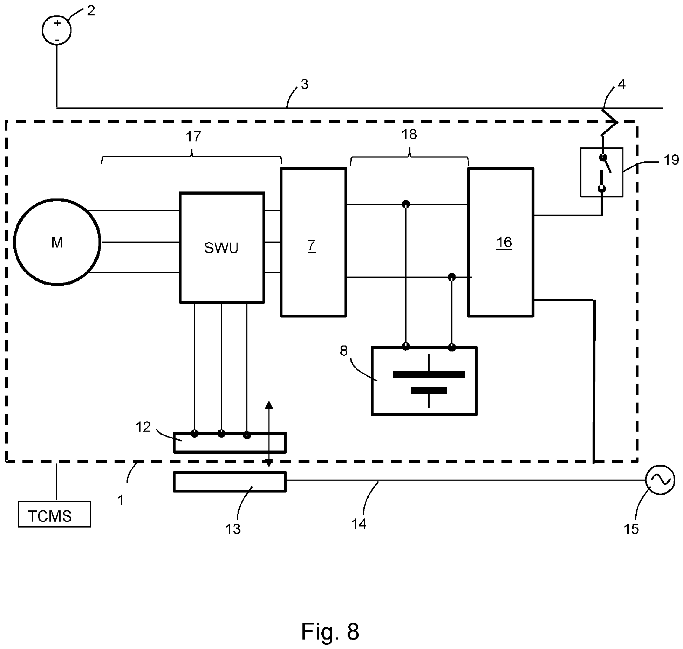

Figure 8 shows schematically another variant of the drive system 1. This variant is similar to the system shown in Figure 7, except that DC power is supplied via the overhead lines (or third rails) 3. The first power supply sub-system still includes a pantograph 4 (or third rail sliding shoe) and a vacuum circuit breaker 19, but instead of a transformer 5 and an AC to DC converter 6 has a DC to DC converter 16 which supplies DC power to the DC link 18.

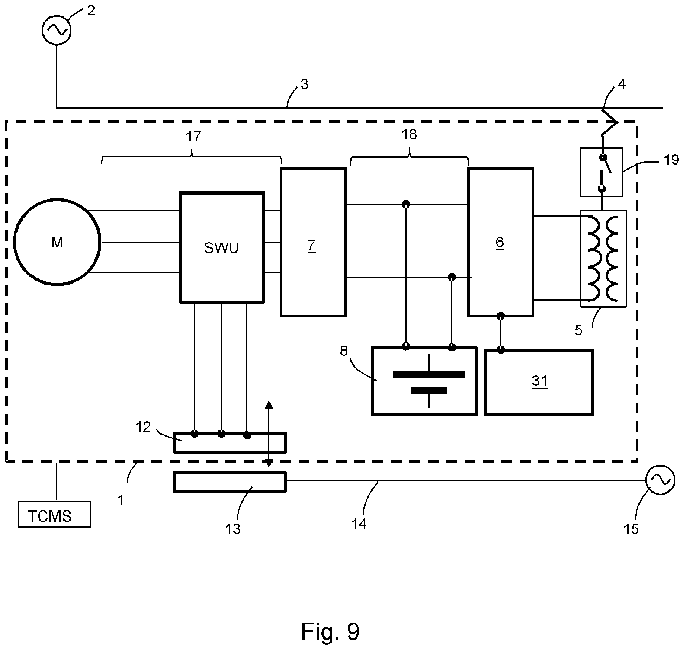

Figure 9 shows schematically yet another variant of the drive system 1. This variant is identical to the system shown in Figure 7, except that the first power supply sub-system is a bi-mode system which additionally includes a generator unit 31. This can also supply AC power to the AC to DC converter 6, which can selectably convert AC power obtained from either the overhead line 3 or the generator unit 31.lt will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

All references cited above are hereby incorporated by reference.

## Claims

1. A drive system (1) for a railway vehicle, the drive system including:
a first power supply sub-system for supplying power from an overhead line (3) or live rail;
an inverter (7) joined to the first power supply sub-system by a DC link (18), the inverter converting the DC power to three phase AC power;
an electric motor (M) for providing traction torque to the vehicle and connected to the inverter (7) by a three phase AC link (17) such that the three phase AC power from the inverter drives the electric motor;
a rechargeable traction battery (8) connected to the DC link (18) for providing DC power to or removing DC power from the drive system (1) at the DC link;
a second power supply sub-system for providing three phase AC power to the drive system (1) at the three phase AC link (17), the second power supply sub-system including a contactor (12) moveable between a deployed position at which the contactor can make an electrical connection to a power outlet (13) of an external three phase AC power supply network (15), and a retracted position at which such an electrical connection is prevented;
wherein the drive system (1) further includes a first switch (SW1, SWU) on the three phase AC link (17), the first switch being configured such that a closed position of the first switch connects the electric motor (M) to the three phase AC link to allow the three phase AC power from the inverter (7) to drive the electric motor, and an open position of the first switch disconnects the electric motor from the three phase AC link to prevent the three phase AC power from the inverter and the three phase power from the second power supply sub-system from driving the electric motor; and
wherein the drive system (1) further includes a controller (TCMS) which controls operation of the drive system, the controller being configured to provide: (i) a first circuit configuration of the drive system in which the contactor (12) is in its retracted position, the first switch (SW1, SWU) is in its closed position, and the electric motor (M) is driveable by power supplied by the first power supply sub-system and/or the traction battery (8), and (ii) a second circuit configuration of the drive system in which the contactor is in its deployed position for connection to the power outlet (13), the first switch is in its open position, and the traction battery is chargeable by three phase AC power supplied by the three phase AC power supply network (15) and converted to DC power by the inverter (7).

2. The drive system according to claim 1, wherein the controller (TCMS) is configured to provide a third circuit configuration of the drive system (1) in which the contactor (12) is in its retracted position and the first switch (SW1, SWU) is in its open position, and the traction battery (8) is chargeable by power supplied by the first power supply sub-system.

3. The drive system according to claim 1 or 2 which further includes a second switch (SW2) positioned between the contactor (12) and the three phase AC link (17), the second switch being configured such that a closed position of the second switch connects the contactor (12) to the three phase AC link to allow the three phase AC power from the external three phase AC power supply network (15) to pass from the contactor to the inverter (7), and an open position of the second switch which disconnects the contactor from the three phase AC link to prevent the three phase AC power from the external three phase AC power supply network from reaching the three phase AC link;
wherein in the first circuit configuration the second switch (SW2) is in its open position, and in the second circuit configuration the second switch is in its closed position.

4. The drive system according to claim 3, wherein the first (SW1) and second (SW2) switches are interlinked such that the second switch can be in its closed position only when the first switch is in its open position, and vice versa.

5. The driving system according to claim 1 or 2, wherein the first switch (SWU) is a three position switch having the closed position, the open position and an isolation position, the first switch being further configured such that the closed position also disconnects the contactor (12) from the three phase AC link (17) to prevent the three phase AC power from the external three phase AC power supply network (15) from reaching the three phase AC link, the open position also connects the contactor to the three phase AC link to allow the three phase AC power from the external three phase AC power supply network to pass from the contactor to the inverter (7), and the isolation position disconnects the contactor from the three phase AC link and disconnects the electric motor (M) from the three phase AC link.

6. The driving system according to any one of the previous claims, further including an extension mechanism (23) on which the contactor (12) is mounted, the mechanism being extendable from the vehicle to move the contactor to its deployed position, and withdrawable to the vehicle to move the contactor to its retracted position;
wherein the extension mechanism is locatable beneath a floor (30) of the railway vehicle for electrical connection by the contactor (12) to the power outlet (13) of the external three phase AC power supply network (15) located on the ground beneath the vehicle between the rails (22) of a railway track.

7. The driving system according to any one of the previous claims, wherein the contactor (12) has three current collectors (20) for making respective electrical contact to a set of three, parallel, adjacent rails (21) of the power outlet (13), the parallel rails extending in the direction of a track on which the vehicle is located.

8. The driving system according to any one of the previous claims, wherein the controller (TCMS) is further configured to detect that the power outlet (13) of the external three phase AC power supply network (15) is in a location suitable for electrical connection thereto by the contactor (12), and to allow adoption of the second circuit configuration by the drive system (1) only when the power outlet is thus-detected.

9. The driving system according to claim 8, wherein the controller (TCMS) is further configured to detect that the power outlet (13) is in a suitable location by reference to one or more detection units (29) associated with the power outlet whose positions the controller can detect.

10. A railway vehicle having the drive system (1) according to any one of the previous claims.

11. A power outlet (13) of a three phase AC power supply network (15), the outlet being installable on the ground between the rails (22) of a railway track for charging a rechargeable traction battery (8) of a drive system (1) of a railway vehicle, the power outlet having a set of three, parallel, adjacent rails (21) extending in the direction of the track for electrical connection to respective current collectors (20) of a contactor (12) of the drive system deployable from beneath the floor (30) of the railway vehicle.

12. The power outlet according to claim 11 further including a respective detection unit (29) at each end of the set of rails (21) in the direction of the track, the detection units being detectable by the railway vehicle to allow the vehicle to determine that a contactor (12) of its drive system (1) is deployable from the vehicle to make an electrical connection to the power outlet (13).

13. The power outlet of claim 11 or 12 installed on the ground between the rails (22) of a railway track.

14. A combination of the railway vehicle of claim 10 and the installed power outlet (13) of claim 13, the railway vehicle being located on the rails (22) of the railway track.

15. A method of charging the traction battery (8) of the drive system (1) of the railway vehicle of claim 10, the method including:
using the controller (TCMS) to provide the first circuit configuration;
operating the vehicle to locate the contactor (12) such that it is deployable for connection to a power outlet (13) of an external three phase AC power supply network (15);
using the controller (TCMS) to provide the second circuit configuration; and
charging the traction battery (8) by three phase AC power supplied by the three phase AC power supply network (15) and converted to DC power by the inverter (7).
